# EUROPEAN PATENT SPECIFICATION

(11) **EP 3 093 571 B1**
(45) Date of publication and mention of the grant of the patent: **14.11.2018**
(21) Application number: 16169735.4
(22) Date of filing: 13.05.2016
(51) Int. Cl.: F24F 11/00, F24F 12/00

(54) **METHOD TO DEFROST THE HEAT EXCHANGER OF AN AIR TREATMENT UNIT FOR AN AIR-TO-AIR HEAT PUMP PLANT AND CORRESPONDING AIR TREATMENT UNIT**
VERFAHREN ZUM ABTAUEN DES WÄRMETAUSCHERS EINER LUFTAUFBEREITUNGSANLAGE FÜR EINE LUFT-LUFT-WÄRMEPUMPE UND ENTSPRECHENDE LUFTAUFBEREITUNGSANLAGE
PROCÉDÉ AFIN DE DÉGIVRER L'ÉCHANGEUR DE CHALEUR D'UNE UNITÉ DE TRAITEMENT DE L'AIR POUR UNE INSTALLATION DE POMPE À CHALEUR AIR-AIR ET UNITÉ DE TRAITEMENT D'AIR CORRESPONDANTE

(30) Priority: 13.05.2015 IT BO20150244
(43) Date of publication of application: 16.11.2016
(73) Proprietor: Cetra S.r.l. Con Unico Socio, 40051 Malalbergo (IT)
(72) Inventor: Poletto, Fabio, 40051 Malalbergo (IT); Nicoli, Massimo, 40051 Malalbergo (IT)
(74) Representative: Bergadano, Mirko

(56) References cited:
- EP-A1- 2 821 727
- WO-A1-02/084186
- WO-A1-03/067159
- WO-A1-2007/095985
- WO-A2-2011/154635
- FR-A1- 2 978 532

## Description

The invention relates to a method to defrost the external heat exchanger of an air treatment unit for an air-to-air heat pump conditioning plant used to heat an inside environment of a building, and to a corresponding air treatment unit implementing said method.

In particular, the invention finds advantageous, but not exclusive, application in HVAC (Heat, Ventilating and Air Conditioning) plants, to which explicit reference will be made in the description below without because of this loosing in generality.

As it is known, an air-to-air heat pump HVAC plant, which is used to heat or cool the inside environments of a building, comprises, in some types of installations, one or more external air treatment units fitted on the roof of the building, the so-called Roof Top Units (RTU), each comprising a heat exchanger to exchange heat with the external air, hereinafter referred to as external heat exchanger for the sake of brevity, a heat exchanger to exchange heat with the internal air of the environments, hereinafter referred to as internal heat exchanger for the sake of brevity, and ventilation means coupled to the heat exchangers. A central unit of the HVAC plant comprises a compressor and a reversible expansion valve to carry out, together with the heat exchangers of the different air treatment units, a reversible refrigeration cycle on a cooling gas, thus providing the first air-to-air heat pump.

In the operating mode for the heating of the environments, the external heat exchanger acts as an evaporator and often tends to frost in conditions of low temperature and high degree of humidity of the external air. The ice building up on the fins and coils of the external heat exchanger produces a significant decrease of the heat exchange coefficient and, therefore, the heat exchanger needs to be periodically defrosted so as to restore the maximum operating efficiency of the HVAC plant.

One of the most common solutions implemented to defrost the external heat exchanger of the air treatment unit is that of reversing the refrigeration cycle of the heat pump, so as to allow said heat exchanger to work as a condenser and, therefore, increase its temperature. The drawback of this solution lies in a great energy inefficiency and in a strong inconvenience caused to users, as the HVAC works as a chiller, which means that it introduces cold air into the inside environments. The inconvenience caused to users could be prolonged in time, since the defrosting of the external heat exchanger takes place only because of the dissipation of a quantity of heat corresponding to the electrical power absorbed by the compressor.

European Patent Application No. EP 2821727 A1 discloses a method for operating a ventilation heater with heat recovery. Outdoor air is conducted via an air-to-air heat exchanger, where the air receives heat from exhaust air. Outgoing air is directed in the direction of flow from the air-to-air heat exchanger as a heat source to an evaporator of a heat pump in order to evaporate a refrigerant contained in a refrigerant circuit. Outdoor air can be added to the exhaust air for sufficient energy content. A supply air heated by the air-to-ta air heat exchanger with a first temperature is heated in an air heater to a second temperature, which is above a temperature of the exhaust air.

International Patent Application No. WO 2011/154635 A2 discloses an air conditioning system for a building, comprising a first duct that guides the fluid from the outside to the inside, a second duct that guides the fluid from the inside to the outside, at least one first evaporator/condenser device comprising a first part and a second part that can operate respectively and alternately in condenser mode and in evaporator mode with a view to modifying the temperature of the fluid. The system comprises a rotary exchanger, the first part being positioned downstream of the rotary exchanger in the first duct, and the second part being positioned downstream of the rotary exchanger and in the second duct. In the heating operation mode, the incoming fluid is heated in the first duct and blown toward the inside of the building, and is then extracted and discharged to the outside, the second part being in evaporator mode to extract heat energy from the extracted fluid and transmit it to the first part, and said first part being in condenser mode in order to heat the incoming fluid in the first duct.

French Patent Application No. FR 2978532 A1 discloses a device having a thermodynamic exchanger, which operates in cooling or reheating modes and is arranged between an air-to-air heat exchanger, and a fresh air outlet in direction of a building. Air derivation units allow fresh air coming from outside of the device to be directed toward a return air outlet in response to a request and allow the return air coming from the building to be directed toward another fresh air outlet blown in the direction of the building, without passing through the air-to-air heat exchanger.

The object of the invention is to provide an air treatment unit for an air-to-air heat pump plant used to heat an inside environment of a building, said treatment unit not being affected by the drawbacks described above and, at the same time, being easy and economic to be produced.

According to the invention, there are provided an air treatment unit for an air-to-air heat pump conditioning plant used to heat an inside environment of a building, a method to defrost the external heat exchanger of an air treatment unit, and an air-to-air heat pump conditioning plant used to heat the air of an inside environment of a building, according to the features set forth in the appended claims.

Further advantageous features of the invention are described in the dependent claims.

The invention will be best understood upon perusal of the following detailed description of a preferred embodiment, which is provided by way of example and is not limiting, with reference to the accompanying drawings, in which:
- figure 1 shows, in a schematic manner, the structure of an air treatment unit for an air-to-air heat pump conditioning plant, the air treatment unit being made according to the invention;
- figure 2 shows the air treatment unit of figure 1 during the operation in the defrosting mode;
- figure 3 shows the air treatment unit according to a second embodiment of the invention during the operation in the defrosting mode; and
- figure 4 shows the air treatment unit according to a third embodiment of the invention during the operation in the defrosting mode.

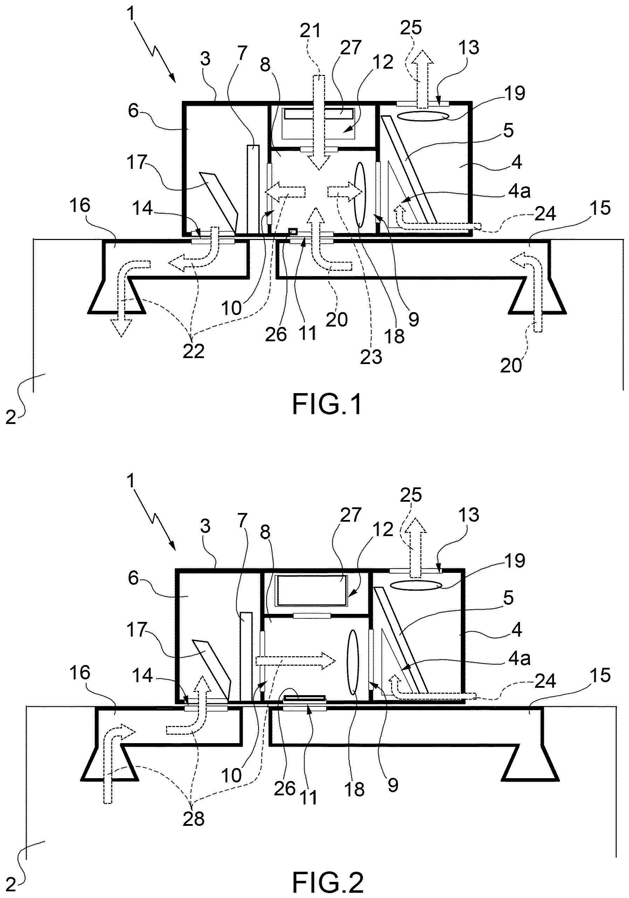

In figure 1, number 1 indicates, as a whole, an air treatment unit for an air-to-air heat pump conditioning plant, which is designed to heat the air of inside environments of a building. The air treatment unit 1 is a so-called RTU, which means that it is fitted on the outside, on the roof of the building; for greater simplicity, the air treatment unit 1 is shown fitted on the roof of a respective inside environment to be heated, which is indicated with 2.

With reference to figure 1, the air treatment unit 1 comprises a box 3, which houses, on the inside, a dissipation compartment 4, where there is a heat exchanger to exchange heat with the air of the outside environment, hereinafter briefly referred to as external heat exchanger and indicated with 5, a delivery compartment 6, where there is a heat exchanger to exchange heat with the air to be introduced into the environment 2, hereinafter briefly referred to as internal heat exchanger and indicated with 7, and a mixing compartment 8, which communicates with the dissipation compartment 4 and with the delivery compartment 6 through respective openings 9 and 10. The heat exchangers 5 and 7 are both of the type with finned tubes. The delivery compartment 6 is preferably insulated so as to release less heat into the outside environment.

The conditioning system comprises a central unit (not shown, which houses a compressor and a reversible expansion valve, which are connected, in a known fashion, to the heat exchangers 5 and 7, so as to form a refrigeration circuit, which is able to carry out a reversible refrigeration cycle on a cooling gas, thus providing a known air-to-air heat pump.

With reference - again - to figure 1, a bottom wall of the box 3 has an opening defining an air recirculation inlet 11 communicating with the mixing compartment 8 so as to draw internal air from the environment 2 and an opening defining an air delivery outlet 14 communicating with the delivery compartment 6 so as to feed treated air into the environment 2. A side wall of the box 3 has an opening defining an air renewal inlet 12 communicating, as well, with the mixing compartment 8 so as to draw external air to be mixed with the internal air. An upper wall of the box 3 has an air expulsion outlet 13 communicating with the dissipation compartment 4 so as to expel air towards the outside environment. At least one of the side walls of the box 3 comprises a respective air vent 4a communicating with the dissipation compartment 4 so as to suck air from the outside environment in order to create, in combination with the air expulsion outlet 13, an external air circulation on the inside of the dissipation compartment 4, which exchanged heat with the external heat exchanger 5.

The conditioning plant comprises a an air recovery pipe 15, which is mounted on the ceiling of the environment 2 and communicates with the air recirculation inlet 11 of the air treatment unit 1, and an air delivery pipe 16, which is mounted, as well, on the ceiling of the environment 2 and communicates with the air delivery outlet 14 of the air treatment unit 1.

The internal heat exchanger 7 is arranged in the delivery compartment 6 in front of the opening 10. The air treatment unit 1 comprises a fan 17, which is arranged in the delivery compartment 6 between the internal heat exchanger 7 and the air delivery outlet 14, so as to recall air from the opening 10 through the internal heat exchanger 7 and push said air out of the air delivery outlet 14.

The air treatment unit 1 comprises a second fan 18, which is arranged in the mixing compartment 8 in front of the opening 9 so as to push air into the dissipation compartment 4, and a third van 19, which is positioned in front of the expulsion outlet 13 so as to recall air from the opening 9 and/or from the air vent 4a, through the external heat exchanger 5, and expel said air out of the expulsion outlet 13 itself

The central unit of the conditioning plant comprises an electronic control unit, which is designed to control the operation of the plant and, in particular, of the compressor, of the expansion valve and of the fans 17-19 according to a normal mode, which carries out the heating of the environment 2, and a defrosting mode, which carries out the defrosting of the external heat exchanger 5.

In use, in the normal mode, the refrigeration cycle operates according to direction that is such that the heat exchanger 7 works as a condenser and, therefore, releases heat into the air and the external heat exchanger 5 works as an evaporator and, therefore, absorbs heat from the air. In other words, in the normal mode, the internal heat exchanger 7 heats up and the external heat exchanger 5 cools down.

In the normal mode, the fans 17 and 18 create a depression in the mixing compartment 8, which recalls an internal air flow 20 from the recirculation inlet 11 and an external air flow 21 from the renewal inlet 12. The internal air flow 20 originates from the environment after having flown through the air recovery pipe 15. The air flows 20 and 21 are mixed with one another in the mixing compartment 8 and the mixed air is partly sucked by the fan 17 through the opening 10 and the internal heat exchanger 7, according to the air flow 22, and partly sucked and pushed towards the opening 9 and the external heat exchanger 5 by the fan 18, according to the air flow 23. The mixed air flow 22 generated by the fan 17 flows out of the air delivery outlet 14 and flows through the entire delivery pipe 16 before getting into the environment 2. The mixed air flow 23 joins an external air flow 24, which enters from the air vent 4a because of a depression in the mixing compartment 4 created by the fan 19, so as to form an air flow 25, which flows out of the expulsion outlet 13 after having flown through the external heat exchanger 5.

In the defrosting mode, the refrigeration cycle temporarily operates according to a direction that is opposite to the one of the normal mode, so that the external heat exchanger 5 works as a condenser and, therefore, heats up; as a consequence, the internal heat exchanger 7 works as an evaporator and, therefore, cools down.

According to the invention, the air treatment unit 1 comprises two closing devices 26 and 27, which can be controlled by the electronic control unit so as to open or close the recirculation inlet 11 and the air renewal inlet 12, respectively. Each closing device 26, 27 consists, for example, of a respective shutter.

In the normal mode, the closing devices 26 and 27 are controlled so as to leave the respective inlets 11 and 12 open, so that the air flows are those shown in figure 1.

In the defrosting mode, the fan 17 is turned off, the fans 18 and 19 remain turned on and the closing devices 26 and 27 are controlled so as to close the respective inlets 11 and 12, thus changing the direction of the air flows in the air treatment unit 1 in the way shown in figure 2.

With reference to figure 2, during the defrosting mode, an air flow 28 is created, which enters from the air delivery outlet 14, after having flown through the delivery pipe 16 in a backwards direction, and - in the following order - flows through the internal heat exchanger 7 and the mixing compartment 8, in order to then join the air flow 24 and form the air flow 25, which flows through the external heat exchanger 5 and flows out of the air expulsion outlet 13. The air flow 28 is relatively hot (approximately 20 °C), as it comes from the inside environment 2, and, therefore, it helps the absorption of heat by the internal heat exchanger 7, said heat being transferred to the internal heat exchanger 5, thus accelerating the defrosting thereof.

Hence, the air treatment unit 1 does not release cold air into the environment 2 during the defrosting mode, thanks to the reversal of the air flow in the delivery compartment 6 and to the closing of the recirculation inlet 11. The lack of a recirculation of air in the environment 2 produces a brief depression in the environment 2, which, though, is much less perceivable and unpleasant than an introduction of cold air.

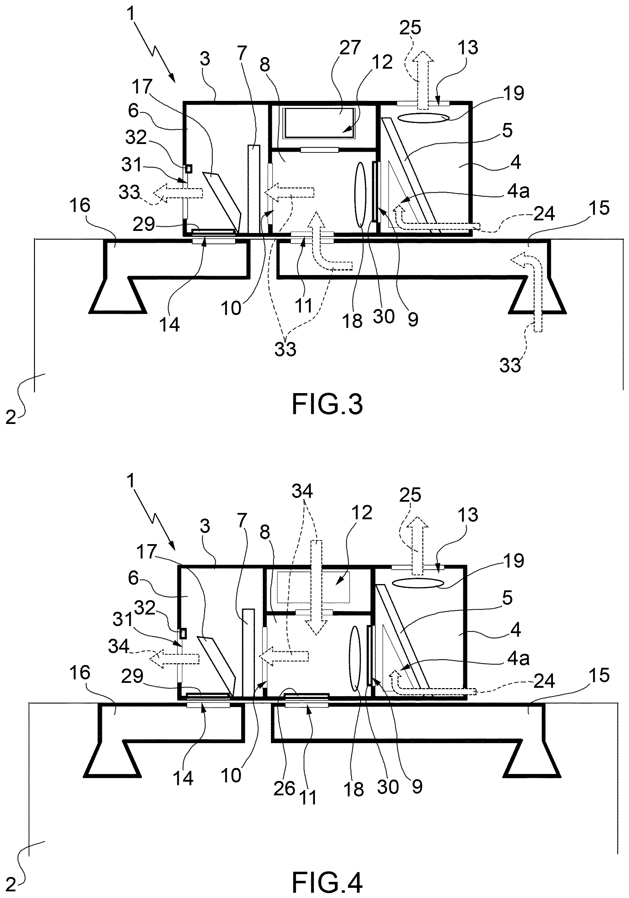

According to a further embodiment of the invention shown in figure 3, in which the same elements are indicated with the same numbers and abbreviations of figure 1, the air treatment unit 1 comprises, instead of the closing device 26 of figure 1, two closing devices 29 and 30, which can be controlled by the electronic control unit so as to open or close the air delivery outlet 14 and the opening 9, respectively. Furthermore, a side wall of the box 3 has an opening defining an air expulsion outlet 31, which communicates with the delivery compartment 6 and is associated with another closing device 32, which can be controlled by the electronic control unit so as to open or close said outlet 31. The closing devices 29, 30 and 32 are of the same type as the closing device 27.

In the normal mode, the closing devices 27, 29 and 30 are controlled so as to respectively leave the air renewal inlet 12, the air delivery outlet 14 and the opening 9 open and the closing device 32 is controlled so as to close the air expulsion outlet 31, so that the air flows are the ones shown in figure 1.

Figure 3 shows the defrosting mode, in which the fan 18 is turned off, the fans 17 and 19 remain turned on, the closing devices 27, 29 and 30 are controlled so as to respectively close the air renewal inlet 12, the air delivery outlet 14 and the opening 9, whereas the closing device 32 is controlled so as to open the air expulsion outlet 31, thus changing the air flows in the air treatment unit 1 in the way shown in figure 3. In particular, during the defrosting mode, an air flow 33 is created, which enters from the air recirculation inlet 11 after having flown through the recovery pipe 15 and flows through the mixing compartment 8 and the internal heat exchanger 7, like in the normal mode, in order to then flow out of the air expulsion outlet 31, instead of the air delivery outlet 14.

The internal heat exchanger 7 is in a vertical position, the air delivery outlet 14 is in a horizontal position and the air expulsion outlet 31 is in a vertical position in front of the internal heat exchanger 7. The fan 17 has a rotation axis that is oblique relative to the vertical, so as to substantially face both the air delivery outlet 14 and the air expulsion outlet 31, in order to make the expulsion of air easier during both the normal and the defrosting mode.

The closing of the opening 9 allows the air flow 25 to be exclusively generated by the external air flow 24 entering from the air vent 4a. The air flow 33 is relatively hot (approximately 20 °C), as it comes from the inside environment 2, and, therefore, it helps the absorption of heat by the internal heat exchanger 7, said heat being transferred to the internal heat exchanger 5, thus accelerating the defrosting thereof.

Hence, even the air treatment unit 1 according to the embodiment of figure 3 does not release cold air into the environment 2 during the defrosting mode, thanks to the closing of the air delivery outlet 14 and to the opening of the air expulsion outlet 31 in the delivery compartment 6. The lack of a recirculation of air in the environment 2 produces a brief depression in the environment 2, which, though, is much less perceivable and unpleasant than an introduction of cold air.

According to a further embodiment of the invention shown in figure 4, in which the same elements are indicated with the same numbers and abbreviations of figure 3, the air treatment unit 1 comprises, instead of the closing device 27, the closing device 26 of figure 1

In the normal mode, the closing devices 26, 29 and 30 are controlled so as to respectively leave the air recirculation inlet 11, the air delivery outlet 14 and the opening 9 open and the closing device 32 is controlled so as to close the air expulsion outlet 31, so that the air flows are the ones shown in figure 1.

Figure 4 shows the defrosting mode, in which the fan 18 is turned off, the fans 17 and 19 remain turned on, the closing devices 26, 29 and 30 are controlled so as to respectively close the air recirculation inlet 11, the air delivery outlet 14 and the opening 9, whereas the closing device 32 is controlled so as to open the air expulsion outlet 31, thus changing the air flows in the air treatment unit 1 in the way shown in figure 4. In particular, during the defrosting mode, an air flow 34 is created, which enters from the air renewal inlet 12 and flows through the mixing compartment 8 and the internal heat exchanger 7, like in the normal mode, in order to then flow out of the air expulsion outlet 31, instead of the air delivery outlet 14. The closing of the opening 9 allows the air flow 25 to be exclusively generated by the external air flow 24 entering from the air vent 4a.

Hence, the air treatment unit 1 according to the embodiment of figure 4 works similarly to the embodiment of figure 3, with the difference that the air used to exchange heat with the internal heat exchanger 7 is sucked from the outside environment and not from the inside environment 2 and, therefore, no depression is generated in the environment 2. However, the pressures arising along the refrigeration circuit are lower and the temperature of the external heat exchanger 5 will be lower compared to those of the embodiments of figures 2 and 3, with the consequence that the defrosting operation will be slightly slower.

Even though the invention described above especially relates to a precise embodiment, it should not be considered as limited to this single embodiment, as its scope of protection comprises all those variants, changes or simplifications that would be evident for a person skilled in the art, for example a variant in which the dissipation compartment 4 and the mixing compartment 8 do not communicate with one another and the opening 9 directly communicates with the outside environment, so that the air flow 23 (normal mode) or the air flow 28 (defrosting mode of figure 2) is directly expelled towards the outside environment.

## Claims

1. An air treatment unit for an air-to-air heat pump conditioning plant used to heat the air of an inside environment of a building, the air treatment unit (1) comprising an external heat exchanger (5), which normally works as an evaporator, at least one inlet opening (11, 12) to receive air from the inside environment (2) and/or from an outside environment, a delivery opening (14), first fan means (17, 18) to generate a first air flow (22), which normally flows out of the delivery opening (14), and an internal heat exchanger (7), which normally works as a condenser to heat the first air flow (22), and **being characterized in that** said first fan means (17, 18) can be controlled by electronic control means of the plant so as to reverse the direction of the first air flow (28) during a temporary reversal of the refrigeration cycle of the heat pump of the plant, and **in that** it comprises first closing means (26, 27), which can be controlled by the electronic control means so as to close said at least one inlet opening (11, 12) during said temporary reversal of the refrigeration cycle.

2. An air treatment unit according to claim 1 and comprising an inner compartment (8), which communicates with said delivery opening (14) and has said at least one inlet opening (11, 12) and an expulsion opening (9) to expel air out of the compartment (8); said first fan means (17, 18) comprising second fan means (17) to generate said first air flow (22) and third fan means (18) arranged in the compartment (8) to generate a second air flow (23), which flows out of the expulsion opening (9).

3. An air treatment unit according to claim 1 or 2, wherein said at least one inlet opening (11, 12) comprises a recirculation opening (11) to receive air from said inside environment (2) and a renewal opening (12) to receive air from said outside environment; said first closing means (26, 27) comprising second closing means (26) associated with said recirculation opening (11) and third closing means (27) associated with said renewal opening (12) .

4. A method to defrost the external heat exchanger of an air treatment unit according to any of the claims from 1 to 3, the method comprising:
- temporarily reversing the refrigeration cycle of the heat pump of said plant, so as to temporarily switch the condenser/evaporator function between the external heat exchanger (5) and the internal heat exchanger (7);
and being **characterized in that** it comprises:
- during the temporary reversal of the refrigeration cycle, controlling said first closing means (26, 27) so as to close said at least one inlet opening (11, 12) and controlling said first fan means (17, 18) so as to reverse the direction of the first air flow (28), so that the latter enters from the delivery opening (14).

5. A method according to claim 4, wherein said air treatment unit (1) is according to claim 2; controlling said first fan means (17, 18) comprising:
- turning off said second fan means (17) so that said first air flow (28) coincides, on the inside of said compartment (8), with said second air flow (28).

6. A method according to claim 4 or 5, wherein said air treatment unit (1) is according to claim 3; controlling said first closing means (26, 27) comprising:
- controlling said second (26) and third (27) closing means so as to simultaneously close said recirculation opening (11) and said renewal opening (12).

7. An air-to-air heat pump conditioning plant to heat the air of an inside environment of a building, the plant comprising a central unit and at least one air treatment unit (1) according to any of the claims from 1 to 3; said central unit comprising electronic control means, which are configured to implement the method according to any of the claims from 4 to 6.

## Patentansprüche

1. Luftbehandlungseinheit für eine Luft-Luft-Wärmepumpen-Klimatisierungsanlage, die zum Erwärmen der Luft eines Innenraums eines Gebäudes verwendet wird,
wobei die Luftbehandlungseinheit (1) einen externen Wärmetauscher (5), der normalerweise als ein Verdampfer arbeitet, mindestens eine Einlassöffnung (11, 12) zum Empfangen von Luft aus dem Innenraum (2) und/oder von der Außenumgebung, eine Ausgabeöffnung (14), eine erste Gebläseeinrichtung (17, 18) zum Erzeugen eines ersten Luftstroms (22), der normalerweise aus der ersten Ausgabeöffnung (14) ausströmt, und einen internen Wärmetauscher (7) aufweist, der normalerweise als ein Kondensator zum Erwärmen des ersten Luftstrom (22) arbeitet,
wobei die Luftbehandlungseinheit (1) **dadurch gekennzeichnet ist, dass** die erste Gebläseeinrichtung (17, 18) durch eine elektronische Steuereinrichtung der Anlage steuerbar ist, um die Richtung des ersten Luftstroms (28) während einer vorübergehenden Umkehr des Kältekreislaufs der Wärmepumpe der Anlage umzukehren, und
dadurch, dass
sie eine erste Schließeinrichtung (26, 27) aufweist, die durch die elektronische Steuereinrichtung steuerbar ist, um die mindestens eine Einlassöffnung (14) während der vorübergehenden Umkehr des Kältekreislaufs zu schließen.

2. Luftbehandlungseinheit nach Anspruch 1, mit einer inneren Kammer (8), die mit der Ausgabeöffnung (14) kommuniziert und die die mindestens eine Einlassöffnung (11, 12) und eine Ausstoßöffnung (9) zum Ausstoßen von Luft aus der Kammer (8) aufweist,
wobei die erste Gebläseeinrichtung (17, 18) eine zweite Gebläseeinrichtung (17) zum Erzeugen des ersten Luftstroms (22) und eine in der Kammer (8) angeordnete dritte Gebläseeinrichtung (18) zum Erzeugen eines zweiten Luftstroms (23) aufweist, der aus der Ausstoßöffnung (9) ausströmt.

3. Luftbehandlungseinheit nach Anspruch 1 oder 2, wobei die mindestens eine Einlassöffnung (11, 12) eine Umluftöffnung (11) zum Empfangen von Luft aus dem Innenraum (2) und eine Erneuerungsöffnung (12) zum Empfangen von Luft von der Außenumgebung aufweist; wobei die erste Schließeinrichtung (26, 27) eine der Umluftöffnung (11) zugeordnete zweite Schließeinrichtung (26) und eine der Erneuerungsöffnung (12) zugeordnete dritte Schließeinrichtung (27) aufweist.

4. Verfahren zum Entfrosten des externen Wärmetauschers einer Luftbehandlungseinheit nach einem der Ansprüche 1 bis 3, wobei das Verfahren aufweist:
- vorübergehendes Umkehren des Kältekreislaufs der Wärmepumpe der Anlage, um die Kondensator-/Verdampferfunktion vorübergehend zwischen dem externen Wärmetauscher (5) und dem internen Wärmetauscher (7) umzuschalten;
und **dadurch gekennzeichnet ist, dass** es aufweist:
- Steuern der ersten Schließeinrichtung (26, 27) während der vorübergehenden Umkehr des Kältekreislaufs, um die mindestens eine Einlassöffnung (11, 12) zu schließen und
Steuern der ersten Gebläseeinrichtung (17, 18), um die Richtung des ersten Luftstroms (28) umzukehren, so dass dieser über die Ausgabeöffnung (14) eintritt.

5. Verfahren nach Anspruch 4, wobei die Luftbehandlungseinheit (1) eine Luftbehandlungseinheit nach Anspruch 2 ist; wobei das Steuern der ersten Gebläseeinrichtung (17, 18) aufweist:
Abschalten der zweiten Gebläseeinrichtung (17), so dass der erste Luftstrom (28) an der Innenseite der Kammer (8) mit dem zweiten Luftstrom (28) übereinstimmt.

6. Verfahren nach Anspruch 4 oder 5, wobei die Luftbehandlungseinheit (1) eine Luftbehandlungseinheit nach Anspruch 3 ist; wobei das Steuern der ersten Schließeinrichtung (26, 27) aufweist:
Steuern der zweiten (26) und der dritten (27) Schließeinrichtung, um die Umluftöffnung (11) und die Erneuerungsöffnung (12) gleichzeitig zu schließen.

7. Luft-Luft-Wärmepumpen-Klimatisierungsanlage zum Erwärmen der Luft eines Innenraums eines Gebäudes, wobei die Anlage eine Zentraleinheit und mindestens eine Luftbehandlungseinheit (1) nach einem der Ansprüche 1 bis 3 aufweist, wobei die Zentraleinheit eine elektronische Steuereinrichtung aufweist, die dafür konfiguriert ist, das Verfahren nach einem der Ansprüche 4 bis 6 auszuführen.

## Revendications

1. Unité de traitement d'air pour une installation de conditionnement de pompe à chaleur air-air utilisée pour traiter l'air d'un environnement intérieur d'un bâtiment, l'unité de traitement d'air (1) comprenant un échangeur de chaleur externe (5), qui fonctionne normalement comme un évaporateur, au moins une ouverture d'entrée (11, 12) pour recevoir de l'air de l'environnement intérieur (2) et/ou d'un environnement extérieur, une ouverture de distribution (14), des premiers moyens de ventilation (17, 18) pour générer un premier écoulement d'air (22), qui sort normalement de l'ouverture de distribution (14), et un échangeur de chaleur interne (7), qui fonctionne normalement comme un condenseur pour chauffer le premier écoulement d'air (22), et étant **caractérisée en ce que** lesdits premiers moyens de ventilation (17, 18) peuvent être commandés par des moyens de commande électroniques de l'installation de sorte à inverser la direction du premier écoulement d'air (28) pendant une inversion provisoire du cycle de réfrigération de la pompe à chaleur de l'installation, et **en ce qu'**elle comprend des premiers moyens de fermeture (26, 27), qui peuvent être commandés par les moyens de commande électroniques de sorte à fermer ladite au moins une ouverture d'entrée (11, 12) pendant ladite inversion provisoire du cycle de réfrigération.

2. Unité de traitement d'air selon la revendication 1 et comprenant un compartiment interne (8), qui communique avec ladite ouverture de distribution (14) et possède ladite au moins une ouverture d'entrée (11, 12) et une ouverture d'expulsion (9) pour expulser de l'air du compartiment (8), lesdits premiers moyens de ventilation (17, 18) comprenant un deuxième moyen de ventilation (17) pour générer ledit premier écoulement d'air (22) et un troisième moyen de ventilation (18) agencé dans le compartiment (8) pour générer un second écoulement d'air (23), qui sort de l'ouverture d'expulsion (9).

3. Unité de traitement d'air selon la revendication 1 ou 2, **caractérisée en ce que** ladite au moins une ouverture d'entrée (11, 12) comprend une ouverture de recirculation (11) pour recevoir de l'air dudit environnement intérieur (2) et une ouverture de renouvellement (12) pour recevoir de l'air dudit environnement extérieur, lesdits premiers moyens de fermeture (26, 27) comprenant un deuxième moyen de fermeture (26) associé à ladite ouverture de recirculation (11) et un troisième moyen de fermeture (27) associé à ladite ouverture de renouvellement (12).

4. Procédé pour dégivrer l'échangeur de chaleur externe d'une unité de traitement d'air selon l'une quelconque des revendications 1 à 3, le procédé comprenant :
- l'inversion provisoire du cycle de réfrigération de la pompe à chaleur de ladite installation, de sorte à commuter provisoirement la fonction condenseur/évaporateur entre l'échangeur de chaleur externe (5) et l'échangeur de chaleur interne (7),
et étant **caractérisé en ce qu'**il comprend :
- pendant l'inversion provisoire du cycle de réfrigération, la commande desdits premiers moyens de fermeture (26, 27) de sorte à fermer ladite au moins une ouverture d'entrée (11, 12) et la commande desdits premiers moyens de ventilation (17, 18) de sorte à inverser la direction du premier écoulement d'air (28), afin que ce dernier entre à partir de l'ouverture de distribution (14).

5. Procédé selon la revendication 4, **caractérisé en ce que** ladite unité de traitement d'air (1) est selon la revendication 2, la commande desdits premiers moyens de ventilation (17, 18) comprenant :
- la coupure dudit deuxième moyen de ventilation (17) de sorte que ledit premier écoulement d'air (28) coïncide, sur l'intérieur dudit compartiment (8), avec ledit second écoulement d'air (28).

6. Procédé selon la revendication 4 ou 5, **caractérisé en ce que** ladite unité de traitement d'air (1) est selon la revendication 3, la commande desdits premiers moyens de fermeture (26, 27) comprenant :
- la commande dudit deuxième moyen de fermeture (26) et dudit troisième moyen de fermeture (27) de sorte à fermer simultanément ladite ouverture de recirculation (11) et ladite ouverture de renouvellement (12).

7. Installation de conditionnement de pompe à chaleur air-air pour chauffer l'air d'un environnement intérieur d'un bâtiment, l'installation comprenant une unité centrale et au moins une unité de traitement d'air (1) selon l'une quelconque des revendications 1 à 3, ladite unité centrale comprenant des moyens de commande électroniques, qui sont configurés pour mettre en oeuvre le procédé selon l'une quelconque des revendications 4 à 6.
